# EUROPEAN PATENT APPLICATION

(11) **EP 3 648 254 A1**
(43) Date of publication of application: **06.05.2020**
(21) Application number: 19464017.3
(22) Date of filing: 28.10.2019
(51) Int. Cl.: H01R 4/66, H01R 4/46, H02G 13/00

(54) **ASSEMBLY TO CONNECTING RODS, ELECTRODES, TO THE GROUNDING BELT AND MANUFACTURING PROCESS**

(30) Priority: 31.10.2018 RO 201800857
(71) Applicant: Betak SA, 420063 Bistrita Nasaud (RO)
(72) Inventor: Bulea, Caius Casiu, 420033 Bistri?a (RO)
(74) Representative: Isoc, Dorin

(57) **Abstract**

The assembly of connection of the rods (electrodes) to the grounding belt and its embodiment is intended for the construction of surge protection circuits around objectives that extend over large surfaces.

The assembly consists of a support plate welded to the free end of the bolt over which a counterplate is reinforced, on which there are two ribs between which the cylindrical or flat-plate electrical conductor is reinforced with screws (4) with nuts (5) and, for simplifying the mounting, the band is made in three steps, one of fixing, one of immobilization and one of attachment that enters a window **(f)** practiced on the support plate **(2)** and, after catching the conductor, is reinforced by means of a screw and a nut, on the support plate.

## Description

The invention relates to a set of connecting of the rods (electrodes) to the grounding belt and manufacturing process therefore intended for the construction of overvoltage protection circuits around targets that extend over large surfaces.

In order to build overvoltage protection circuits with high footprint objectives on ground, a multitude of electrodes (rods) are included in an electrical circuit through a conductive belt. The connection of the electrodes to the grounding belt or to an electrically assimilated conductor of the belt must take into account the requirement that the electrical resistance be as low as possible, from the mechanical point of view, the assembly is firm and secure and by connecting the anticorrosive properties of the component elements to not be affected.

There are known solutions that involve screw-nut assemblies which, in different ways, stiffen on the electrode plate a welded wing, usually at one end of the rod, a tape that materializes the connection mode within the grounding belt or the assembly is made in another way, namely by welding the strip or round conductor to the electrode tape.

The disadvantages of these assemblies are that the connection implies the drilling of the strip or the welding operations, in the field, on the spot, which means adequate logistics, most often in places without utilities. The operation involves a long time and also involves the removal of the protective layer, anti-corrosive of zinc, which produces a significant reduction of the corrosion resistance of the weld connection, finally, with the dramatic decrease of the lifetime of the grounding socket.

The problem solved by the invention is to simplify the way of attaching the rods to the strip or cylindrical conductor that materializes the grounding belt.

The connecting assembly of rods (electrodes) according to the invention removes the above disadvantages as for a good stiffening it consists of a support plate welded to the upper end of the rod and a counter plate on which there are two ribs between which the cylindrical or conductive electric conductor is stiffened with screws with nuts and, to simplify the mounting, the strip is manufactured in three steps, one of fixing, one of immobilization and one of attachment that enters a window practiced on the support plate and after the conductor is fastened with the help of a screw and a support plate nut.

The advantages of the invention are a) greater simplicity, b) higher functionality and safety in operation and c) a shorter time for making the connections to the assembly.

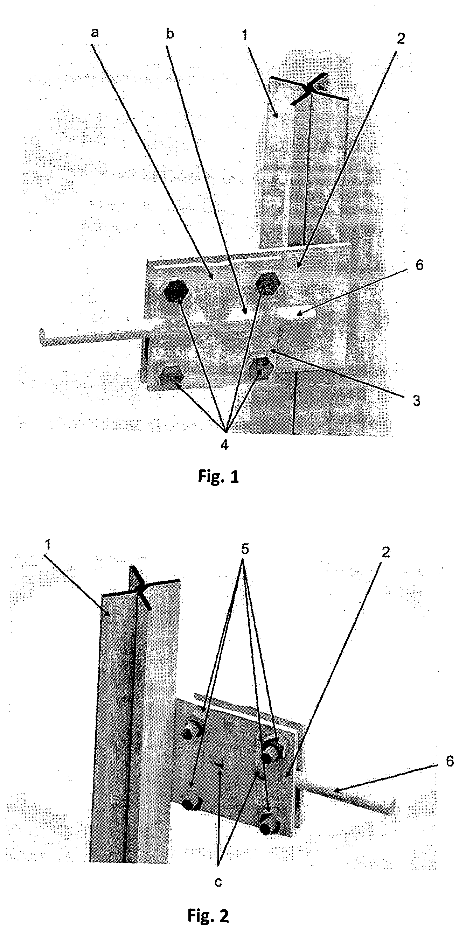

It is given below an example regarding an embodiment of the invention and in connection with **Fig. 1** and **Fig. 2** which represents:
**Fig. 1** - an axonometric front view of the assembly intended for mounting to a grounding belt materialized by a circular electric conductor.
**Fig. 2** - an axonometric rear view of the assembly intended for mounting to a grounding belt materialized by a circular electric conductor.

The assembly according to the invention consists of a grounding electrode (rod) **1** on which a support plate **2** is welded over which a counter plate **3** is fastened by means of four screws **4** and nuts **5.** A conductor **6** is inserted between the plate **2** and the counter plate **3** which is part of the protection circuit. On the face of the counter plate **3** there are horizontal dents **a,** respectively vertical **b** which correspond to the ribs oriented with the convexity towards the outside of the assembly. On the support plate **2** there are some holes **c** used when the conductor is fixed directly, by piercing through some screws.

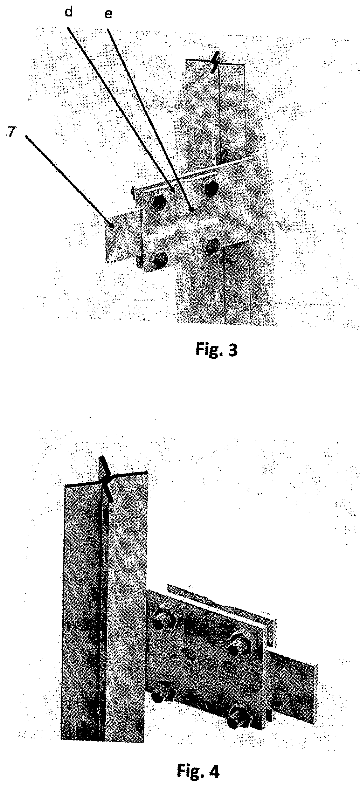

It is given below other example regarding an embodiment of the invention and in connection with **Fig. 3** and **Fig. 4** which represents:
**Fig. 3** - an axonometric front view of the assembly intended for mounting to a grounding belt materialized by a strip.
**Fig. 4** - an axonometric rear view of the assembly intended for mounting to a grounding belt materialized by a strip.

This time the assembly is consisted of a grounding electrode (rod) **1,** a welded support plate **2** over which the belt plate is immobilized with the help of a counter plate **3** through a number of four screws **4** and some nuts **5.** The orientation of the counter plate it is such that the ribs, **a** opposite the horizontal recesses and respectively **b** are oriented inwardly of the assembly.

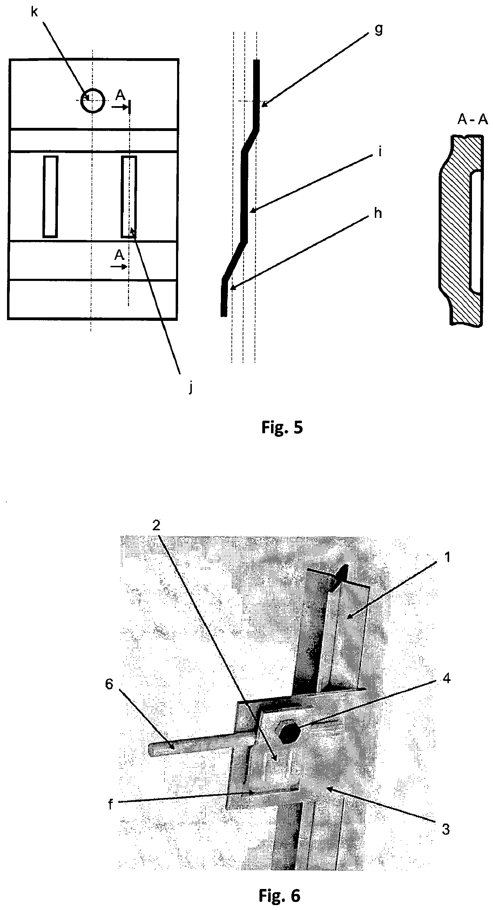

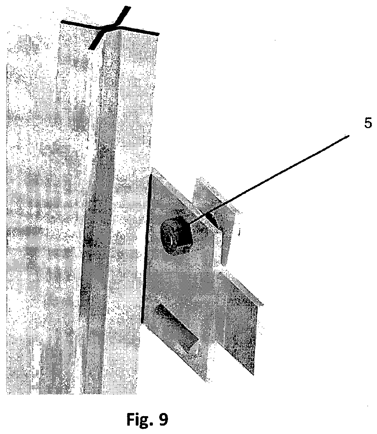

It is given below other example regarding an embodiment of the invention and in connection with **Fig. 6****...** **Fig. 9** which represents:
**Fig. 5** - a detail of embodiment of the counterplate.
**Fig. 6** - an axonometric front view of the assembly intended for mounting the grounding electrode (rod) to a grounding belt as a cylindrical conductor (cable).

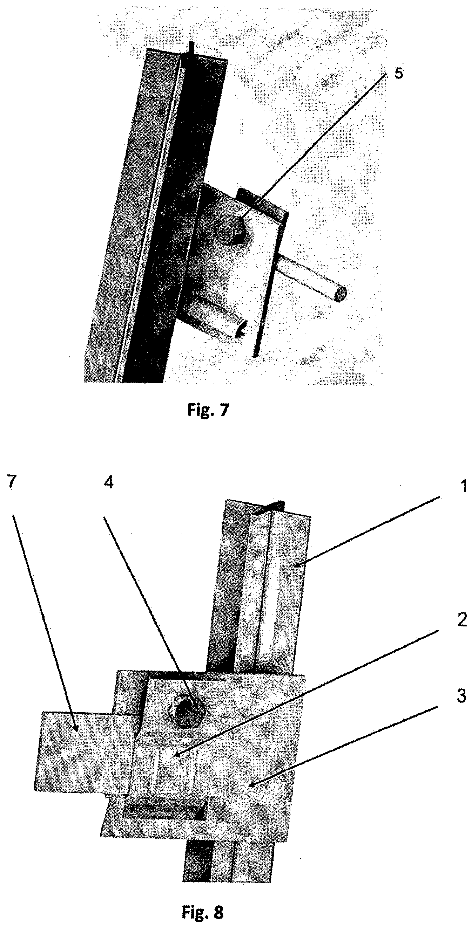

**Fig. 7** **-** an axonometric rear view of the assembly intended for mounting the grounding electrode (rod) to a grounding belt as a cylindrical conductor (cable).
**Fig. 8** **-** an axonometric front view of the assembly intended for mounting the grounding electrode to a grounding belt as a conducting plate.
**Fig. 9** - an axonometric rear view of the assembly intended for mounting the grounding electrode (rod) to a grounding belt as a conducting plate.

The assembly according to the invention consists of a grounding electrode 1, on which a support plate **2** is welded onto which a counter plate **3** is fastened by means of a screw **4** and a nut **5.** Between the plate **2** and the counter plate **3** a conductor **6** is inserted which is part of the protection circuit. On the support plate **2,** with a generally horizontal orientation, a window f is practiced.

The counter plate **3** is so constructed (**Fig. 5**) that, by successively bending a piece of metal sheet so that three step zones are obtained: a first fixing zone, **g,** the second immobilization zone, **h** and an attachment area i. On the immobilization zone **h** one or more recesses **j** with vertical or horizontal orientation are found, bending which corresponds in the form of obvious ribs on the opposite side of the counter plate.

At the time of assembly, the attachment area and the counterplate **3** enters the window **f,** rests on its wall, comprises the grounding belt element on the immobilization area where it treads on the ribs behind the recesses **j** and is reinforced by means of the bolt **4** - nut **5** on the counterplate fastening area **3** which sits on the top of the support plate **2.**

Where appropriate, the grounding belt may be represented by a cylindrical metal conductor **(****Fig. 6****,** **Fig. 7****)** or a strip **(****Fig. 8****,** **Fig. 9****).**

### Bibliographical references

[1] SCHWAB, A.J. Electromagnetic compatibility (In Romanian). Translated by.: MARINESCU, Andrei, POPESCU, Silvia. Foreword: 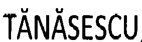 , Florin Teodor. 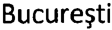 : Editura 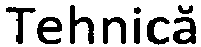 . 1996.
[2] IEC 61312-1 : 1.0. Protection against lightning electromagnetic impulse - Part 1: General principles. 2000.
[3] ***. IEC 62305-1. Protection against lightning - Part 1: General principles. Edition 2.0 2010-12. International Electrotechnical Commission. 2010.
[4] IAEI. IAEI Soares Book on Grounding. International Association of Electrical Inspectors. Sept.1996. ISBN 10: 1890659002 / ISBN 13: 9781890659004.
[5] DIN. Electroplated coatings - Zinc coatings on iron or steel - Terms, testing and corrosion resistance. Standard DIN 50961:2012-04.
[6] DIN. Galvanische Überzüge - Chromatierte Zinklegierungsüberzüge auf Eisen-werkstoffen. Standard DIN 50962:2013-02
[7] SR. Electroplated coatings of zinc with supplementary treatments on iron or steel (ISO 2081:2018).

## Claims

1. Assembly of connecting rods (electrodes) to the grounding belt for the construction of surge protection circuits around objects that extend over large surfaces and where the belt is materialized by cylindrical or strip conductors and a plurality of rods, each individually connected according the placing on the ground wherein, in order to make a close connection, fast and without deterioration of the galvanic insulation, it consists of an electrode (ground) electrode (**1**) on the free end whose welded plate is welded a support (**2**) on which a counterplate (**3**) is fixed, on which there are some horizontal (**a**), respectively vertical (**b**) grooves to which on the opposite side there are ribs oriented with the convexity towards the outside of the assembly when the belt is represented by a conductor cylindrical, respectively with the convexity towards the inside mount when the belt is represented by a flat conductor, counterplate reinforced with four screws (**4**) and nuts (**5**), the same belt can also be reinforced by the support plate (**2**) by means of a screw fixing enter holes (**c**) after passing through holes directly practiced in the conductor.

2. Connecting assembly of the electrodes to the grounding belt as in claim 1 is **characterized in that**, for constructive simplification and mounting, it consists of a grounding electrode (**1**), on which a plate is welded, a support (**2**) in which a window (**f**) with horizontal orientation is practiced, over which is fixed a back plate (**3**) so constructed of sheet so that by successive bending three zones are obtained gradually in the same direction: a first fixing zone (**g**), the second immobilization zone (**h**) and an attachment area (**i**), on the immobilization zone (**h**) are found by bending one or more vertically oriented recesses (**j**), recesses having corresponding obvious ribs on the opposite side of the counterplate (**3**), where they tread during stiffening with the fixing area (**g**) on the support plate (**2**) by a screw-nut assembly (**4, 5**) on the conductor (**6**) which mater it fastens the belt and can be cylindrical or in the form of strip, after the attachment area (**s**) enters the window (**f**) of the support piece (2).
